# EUROPÄISCHE PATENTSCHRIFT

(11) **EP 1 742 315 B1**
(45) Veröffentlichungstag und Bekanntmachung des Hinweises auf die Patenterteilung: **11.11.2015**
(21) Anmeldenummer: 06114780.7
(22) Anmeldetag: 31.05.2006
(51) Int. Cl.: H02B 1/052

(54) **Modulgehäuse zum Aufrasten auf einer Tragschiene**
Modular housing for mounting on a support rail
Boîtier modulaire pour le montage sur un rail de support

(30) Priorität: 06.07.2005 DE 202005010601 U
(43) Veröffentlichungstag der Anmeldung: 10.01.2007
(73) Patentinhaber: Weidmüller Interface GmbH & Co. KG, 32758 Detmold (DE)
(72) Erfinder: Oesterhaus, Jens, 32760, Detmold (DE); Hanning, Walter, 32758, Detmold (DE)
(74) Vertreter: Dantz, Jan Henning

(56) Entgegenhaltungen:
- EP-A1- 0 326 624
- US-B1- 6 224 429
- US-B1- 6 293 820
- US-B1- 6 371 435

## Beschreibung

Die Erfindung betrifft ein Modulgehäuse, insbesondere ein Modulsockelgehäuse, zum Aufrasten auf eine im Querschnitt hutförmige Tragschiene nach dem Oberbegriff des Anspruchs 1.

Ein gattungsgemäßes Modulgehäuse ist aus der US 6 224 429 B1 bekannt. Zum Stand der Technik werden ferner die US 6 326 624 A1 und die EP 0 326 624 A1 genannt.

Reihenklemmenartige Module und Modulsockel sind in verschiedenen Ausführungsformen an sich bekannt. Zum Aufrasten auf die Tragschiene weisen sie eine in ihr Gehäuse aus Isolierstoff integrierte oder eingesetzt Verriegelungseinrichtung auf, welche die Ränder der Tragschiene hintergreift. Es ist einerseits bekannt, die Verriegelungseinrichtung durch federnde Haken zu realisieren, die an ein Isolierstoffgehäuse angespritzt sind und die beim Aufrasten auf die Tragschiene den Tragschienenrand rastend hintergreifen. Das Lösen erfolgt zum Beispiel mit Hilfe eines Schraubendrehers, indem einer der Haken von der Tragschiene weg gebogen wird, wodurch diese Seite der Reihenklemme von der Tragschiene lösbar ist. Dies Verfahren setzt aber voraus, dass der Haken an der Reihenklemme quasi aus Richtung der Tragschiene "von unten" zugänglich ist.

Es sind daher auch Befestigungseinrichtungen bekannt, bei denen das Lösen "von oben" erfolgt. Die bekannten Lösungen dieser Art weisen dabei aber immer noch den Nachteil einer relativ komplizierten Bedienung und Ausgestaltung auf.

Es ist daher die Aufgabe der Erfindung, ein Modulgehäuse, insbesondere ein Modulsockelgehäuse, zu schaffen, das sich durch eine besonders unkomplizierte und sichere Handhabung auszeichnet und dennoch konstruktiv einfach aufgebaut ist.

Die Erfindung löst diese Aufgabe durch den Gegenstand des Anspruchs 1.

Vorteilhafte Ausgestaltungen sind den Unteransprüchen zu entnehmen.

Die Erfindung zeichnet sich durch eine besonders einfache und definierte Handhabung bei niedrigen Herstellungs- und Montagckosten aus. Zur Montage auf die Tragschiene wird das Gehäusceinfach auf die Tragschiene aufgerastet, indem z.B. der eine hakenförmige Abschnitt hinter einem der Tragschienenränder verhakt und dann der Modulsockelgehäuse auf die Tragschiene aufgeschwenkt wird. Zum Lösen ist es nur notwendig, mit einem Werkzeug wie einem Schraubendreher das nach dem Kennzeichnen ausgestaltete Spreizelement zu bedienen.

Vorzugsweise ist das Spreizelement mit einem zumindest über einen Teil seiner axialen Länge abgeflachten, insbesondere elliptischen Querschnitt versehen.

In der Ausgestaltung als drehbarer Spreizstift ist vorzugsweise nur eine viertel Drehung des Spreizstiftes um 90° notwendig, um die Befestigungseinrichtung zu lösen. Sodann kann der Modulsockcl im entriegelten Zustand von der Tragschiene abgenommen werden.

Es ist zweckmäßig, wenn der Spreizstift dazu ausgelegt ist, mit einem Werkzeug, insbesondere mit einem Schraubendreher, betätigt zu werden und er einen Betätigungsschlitz zum Ansetzen eines Schraubendrehers aufweist.

Vorteilhaft ist, dass er sich weit seitlich des Tragschienenrandes anordnen lässt, so dass er gut erreichbar ist.

Nach einer Variante ist der Spreizstift als zum Gehäuse separates Element ausgebildet. Alternativ ist es auch denkbar, dass er im Bereich einer Sollbruchstelle lösbar mit dem Gehäuse einstückig verbunden ist, zumal diese Variante besonders günstig zu fertigen ist. Der Spreizstift wird nach der Herstellung oder bei seiner ersten Nutzung vom Gehäuse gelöst.

Aus dem Stand der Technik ist es an sich bekannt, die Verriegelungseinrichtung mit zwei Verriegelungsschiebern zu versehen, die beidseits des Tragschienenrandes angeordnet und z.B. über eine meanderförmige Feder miteinander verbunden sind.

Von diesem Stand der Technik unterscheidet sich die neue Lösung dadurch, dass sie direkt am oder im Modulsockelgehäuse das Spreizelement, vorzugsweise den Spreizstift, anordnet, der mit einem Werkzeug in Aufrastrichtung der Tragschiene bzw. "von oben" einfach und bequem betätigbar ist.

Nachfolgend wird die Erfindung unter Bezug auf die Zeichnung anhand von Ausführungsbeispiels näher beschrieben. Es zeigt:
- Fig. 1a: eine Schnittansicht und eine Draufsicht eines ersten erfindungsgemäßen Modulsockelgehäuses mit einer Verriegelungsvorrichtung in einer ersten Betriebsstellung;
- Fig. 1b: eine Schnittansicht des Ausführungsbeispiels aus Fig. 1a in einer zweiten Betriebsstellung;
- Fig. 1c: eine perspektivische Ansicht eines Teiles des Ausführungsbeispiels aus Fig. 1a und b mit daran angesetztem Schraubendreher;
- Fig.2a-d: verschiedene Seiten, Schnitt- und Sprengansichten von Bauteilen des Modulsockels aus Fig 1;
- Fig. 3a,b: zwei perspektivische Ansichten des Bereiches des Spreizelementes des Modulsockelgehäuses aus Fig. 1 und 2 vor und nach dem Lösen des Spreizelementes;
- Fig. 4a,b: eine Draufsicht und zwei Schnittansichten des Bereiches des Modulsockelgehäuses aus Fig. 3 vor dem Lösen des Spreizelementes;
- Fig. 5a: eine perspektivische Ansicht der Verriegelungseinrichtung des Modulsockelgehäuses aus Fig. 1;
- Fig. 5b: eine teilgeschnittene Ausschnittsvergrößerung aus Fig. 5a.

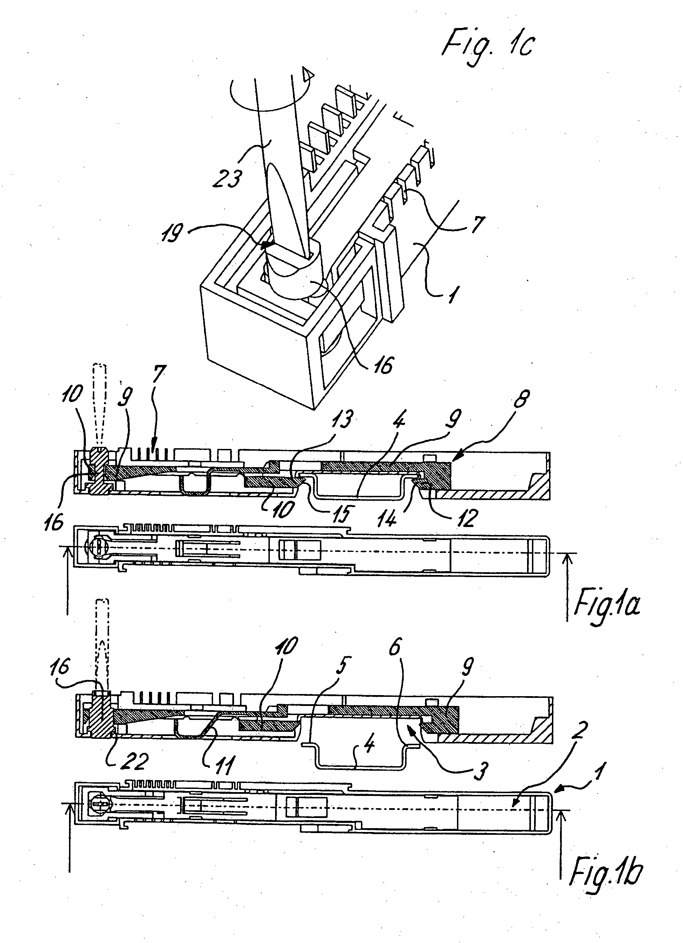

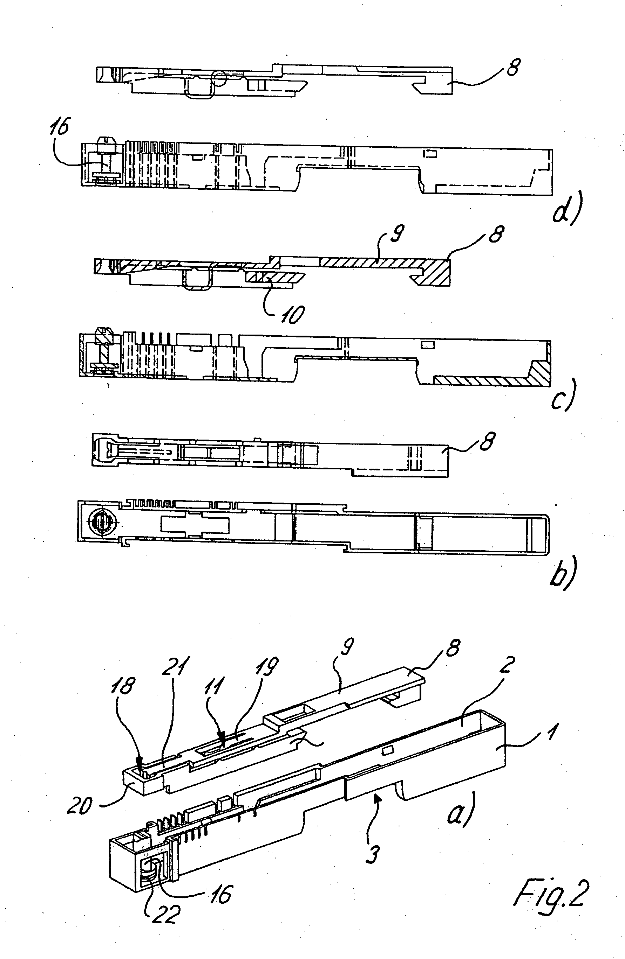

Fig. 1a-c und 2 (insbesondere 2c) zeigt ein rahmenartiges Modulsockelgehäuse 1 mit einer zentrischen Aussparung 2 und einer in Aufrastrichtung x unteren Ausnehmung 3 zur Aufnahme einer im Querschnitt hutförmige Tragschiene 4 mit Tragschienenrändern 5,6.

Auf das Modulsockelgehäuse 1 kann beispielsweise ein (hier nicht dargestelltes) Elektronikmodul der Automatisierungstechnik aufgerastet werden. Benachbarte Modulsockel bzw. deren Modulsockelgehäuse 1 können durch querverbindende (hier ebenfalls nicht dargestellte) Kontakte miteinander verbunden sind. Hierzu weist das Modulsockelgehäuse 1 beispielhaft Schlitze 7 auf.

In das rahmenartige Modulsockelgehäuse 1 ist eine Verriegelungseinrichtung 8 zum Verriegeln des Modulsockels an der Tragschiene eingesetzt, die auf ― hier nicht zu erkennenden inneren Vorsprüngen des Modulsockelgehäuses abgestützt und gehalten ist (Fig. 1, Fig. 2).

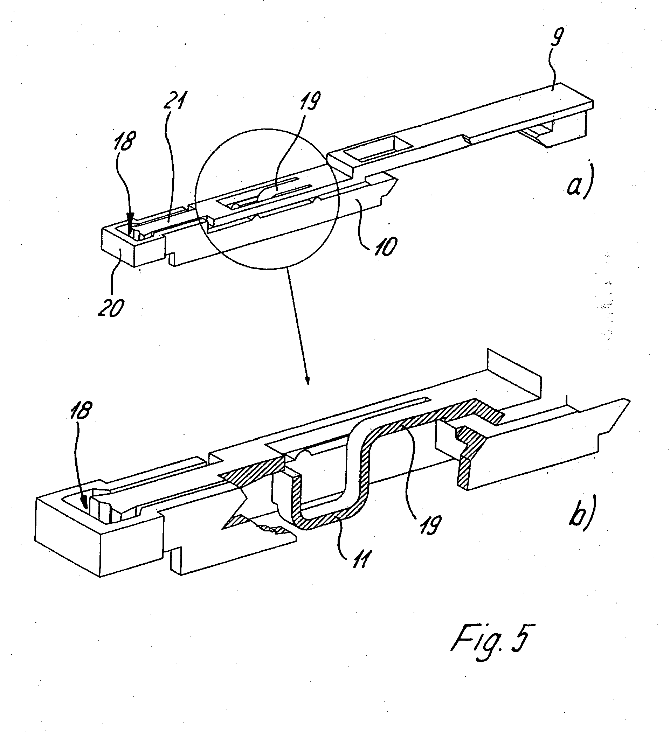

Die Verriegelungseinrichtung 8 weist zwei relativ zueinander verschiebliche Verriegelungsschieber 9, 10 auf, die über eine Feder 11 (Fig. 1 und 5) miteinander - vorzugsweise einstückig - verbunden sind und die jeweils Abschnitte 12, 13 zum Unter- bzw. Hintergreifen der Ränder 4, 5 der Tragschiene 3, 4 aufweisen.

Die Verriegelungsschieber 9, 10 weisen jeweils in Einrastschrägen 14, 15 auf. Sie sind senkrecht zur Tragschiene in entgegen gesetzten Richtungen im Modulsockelgehäuse 1 verschieblich geführt. Die Feder 11 ist derart ausgelegt und angeordnet, dass sie die beiden Verriegelungsschieber 9, 10 im Modulsockelgehäuse 1 aufeinander zu zieht.

Zum Aufrasten auf die Tragschiene wird das Modulsockelgehäuse 1 mit den Verriegelungsschiebern 9, 10 im Wesentlichen senkrecht von oben (relativ zur Tragschiene) oder durch eine Art Aufschwenkbewegung auf die Tragschiene aufgerastet. So kann einer der Verriegelungsschieber 9 mit einem hakenartigen Abschnitt 12 hinter einem der Tragschienenränder verhakt werden. Sodann wird das Modulsockelgehäuse 1 verschwenkt, bis der andere Verriegelungsschieber 10 an seiner Einführschräge 15 die Tragschiene berührt. Beim weiteren Niederschwenken werden die Verriegelungsschieber 12, 13 gegen die Kraft der sie verbindenden Feder 11 auseinandergespreizt, bis auch der weitere hakenförmige Abschnitt 13 den anderen Rand der Tragschiene schnappend bzw. rastend hintergreift. Derart ist der Modulsockel sicher an der Tragschiene 3 verrastet.

Zum Lösen der beiden Verriegelungsschieber 9, 10 werden diese mit einem Spreizelement gegen die Kraft der Feder 11 auseinander gespreizt (Fig. 2a, b).

Nach Fig. 1 bis 5 ist das Spreizelement nach einer besonders vorteilhaften Ausgestaltung als Spreizstift 16 zumindest über einen Teilbereich seiner axialen Länge mit einem abgeflachten, nicht kreisrunden (z.B. elliptischen) Querschnitt versehen.

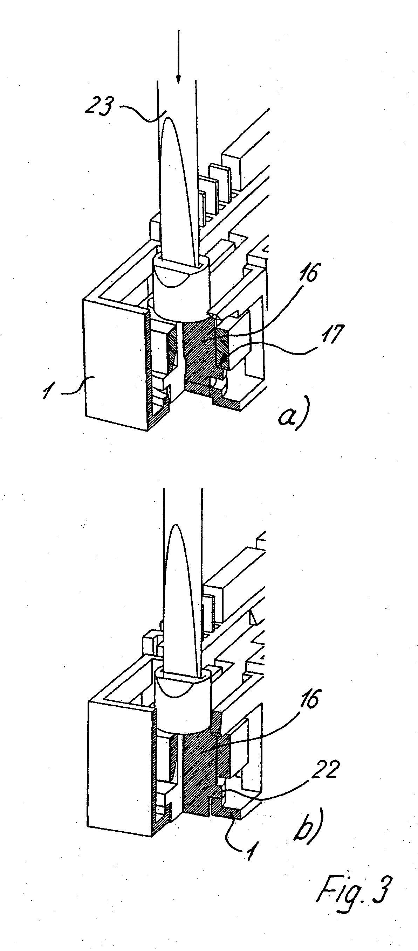

Der Spreizstift 16 ist dazu ausgelegt, mit einem Werkzeug, insbesondere mit einem Schraubendreher 23, betätigt zu werden. Der Spreizstift 16 kann als separates Element ausgebildet oder im Bereich einer Sollbruchstelle 17 (Fig. 3a) lösbar mit dem Modulsockelgehäuse einstückig verbunden sein.

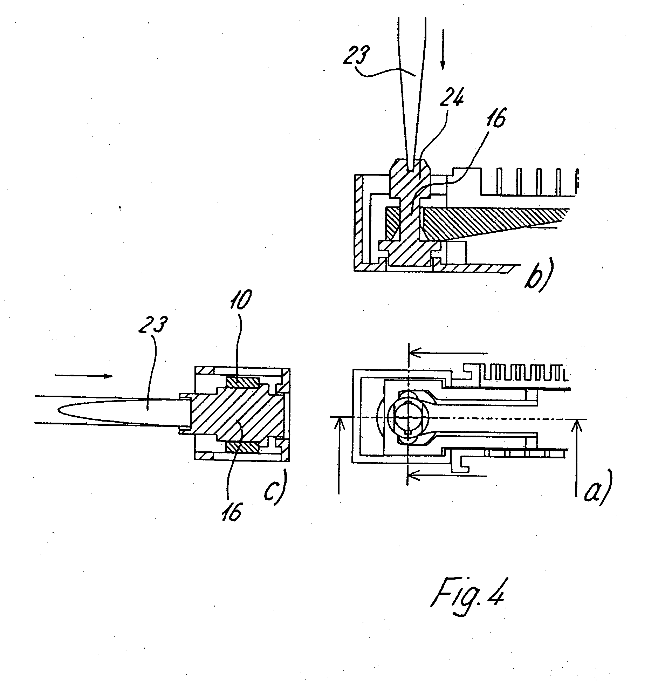

Hier ist die Sollbruchstelle 17 als Kragen oder als Abschnitt eines Kragens derart ausgelegt, dass sich der Spreizstift 16 durch ein axiales Niederdrücken vom Modulsockelgehäuse aus Isolierstoff lösen bzw. losbrechen lässt (Fig. 3, 4).

Der Spreizstift 16 ragt mit seinem abgeflachten Bereich in einen Spalt 18 (Fig. 2a) zwischen den beiden Verriegelungsschiebern 12, 13 wobei er in seiner Ausgangsstellung (nach der Herstellung) in seiner ersten Drehausrichtung mit seiner Schmalseite den Spalt überbrückt (Fig. 1a). Dies ist die Verriegelungsstellung an der Tragschiene (Fig. 1a). Der Spreizstift 16 weist einen Betätigungsschlitz 19 zum Ansetzen des Schraubendrehers 23 auf.

Zum Lösen des Modulsockelgehäuses 1 von der Tragschiene 4 wird zunächst die Sollbruchstelle z.B. durch axiales Niederdrücken oder zu Beginn der Drehbewegung (hier nicht dargestellt) durchtrennt.

Sodann wird der Spreizstift 16 gedreht, wodurch die beiden Verriegelungsschieber 9, 10 auseinander gespreizt werden, bis die hakenförmigen Abschnitte 12, 13 den Tragschienenrand freigeben, so dass das Modulsockelgehäuse 1 von der Tragschiene 4 abnehmbar ist (Fig. 1b).

Um beispielsweise im mittigen Bereich des Modulsockelgehäuses ein Elektronikgehäuse aufrasten und dennoch die Lösefunktion erhalten zu können, ist der Spreizstift hier zudem im äußeren Randbereich des Modulsockelgehäuses 1 auf der einen Seite der Tragschiene angeordnet.

Der eine Verriegelungsschieber 9 übergreift dabei abschnittsweise den anderen Verriegelungsschieber 10. Die beiden Verriegelungsschieber 9, 10 sind dabei über die hier U-förmige Feder 11 einstückig miteinander verbunden. Die Feder 11 erstreckt sich dabei hier von einem mittigen Steg 19 des einen Verriegelungsschiebers 9 nach unten, beschreibt dann ihre Bogen- oder U-Form mit einem oder mehreren Bögen und ist mit ihrem anderen Ende an oberen Verriegelungsschieber angeformt.

Der eine Verriegelungsschieber 9 ― hier der obere, der den anderen Verriegelungsschieber 10 abschnittsweise übergreift, erstreckt sich bis nahe an den von der Tragschiene abgewandten Rand des anderen Verriegelungsschiebers 10 heran, der in seinem seitlichen Randbereich einen ebenfalls rahmenartigen Rand 20 aufweist, in den der erste Verriegelungsschieber 9 mit einem Steg 21 hineinragt, wobei zwischen dem inneren Randbereich des Randes 20 des einen Verriegelungsschiebers 10 und dem seitlichen Randbereich des ersten Verriegelungsschiebers der Spalt 18 ausgebildet ist, in welchen der Spreizstift 16 eingreift (Fig. 2a).

Der Spreizstift 16 weist an seinem unteren Ende einen umlaufenden Kragen 22 auf, an dem er ― z.B. zwischen dem Modulsockelgehäuse 1 und dem ein/en Verriegelungsschieber 10 - drehbar angeordnet ist. An seinem anderen Ende weist er einen Betätigungskopf 24 mit einem kreisrundem Querschnitt auf.

Fig. 3 veranschaulicht das Lösen des Spreizstiftes 16 vom Modulsockelgehäuse 1 durch ein axiales Niederdrücken mit dem Schraubendreher 23, was die Sollbruchstelle 17 am Spreizstift 16 durchtrennt. Sodann kann der Spreizstift 16 gedreht werden, um die beiden Verriegelungsschieber 9, 10 auseinander zu spreizen, so dass das Modulsockelgehäuse 1 von der Tragschiene 4 abnehmbar ist. Gut zu erkennen ist in Fig. 1b die gespreizte Stellung der Feder 11.

Bezugszeichen
- Modulsockelgehäuse: 1
- Aussparung: 2
- Ausnehmung: 3
- Tragschiene: 4
- Tragschienenränder: 5, 6
- Schlitze: 7
- Verriegelungseinrichtung: 8
- Verriegelungsschieber: 9, 10
- Feder: 11
- hakenartige Abschnitte: 12, 13
- Einführschrägen: 14, 15
- Spreizstift: 16
- Sollbruchstelle: 17
- Spalt: 18
- Betätigungsschlitz: 19
- rahmenartiger Rand: 20
- Steg: 21
- Kragen: 22
- Schraubendreher: 23
- Betätigungskopf: 24

## Patentansprüche

1. Modulgehäuse, insbesondere Modulsockelgehäuse (1), zum Aufsetzen auf eine Tragschiene (4) mit Tragschienenrändern (5, 6), wobei das Gehäuse (1) aufweist:
a. eine Verriegelungseinrichtung (8) mit zwei relativ zueinander verschieblichen Verriegelungsschiebern (9, 10), die über eine Feder (11) miteinander verbunden sind und die jeweils Abschnitte (12, 13) zum Untergreifen von Tragschienenrändern (5, 6) aufweisen,
b. ein Spreizelement (16) zum Auseinanderspreizen der Verriegelungsschieber (9, 10) gegen die Kraft der Feder (11) zum Lösen der Verriegelungseinrichtung von den Tragschienenrändem; **dadurch gekennzeichnet, dass**
c. das Spreizelement als drehbarer Spreizstift (16) mit einem wenigstens über einen Teil seiner axialen Länge nicht kreisrunden Querschnitt ausgebildet ist.

2. Gehäuse nach Anspruch 1, **dadurch gekennzeichnet dass** der Spreizstift (16) wenigstens über einen Teil seiner axialen Länge einen abgeflachten Querschnitt aufweist.

3. Gehäuse nach Anspruch 1 oder 2, **dadurch gekennzeichnet, dass** der Spreizstift (16) wenigstens über einen Teil seiner axialen Länge einen elliptischen Querschnitt ausweist.

4. Gehäuse nach einem der vorstchenden Anspruche, **dadurch gekennzeichnet, dass** der Spreizstift (16) dazu ausgelegt ist, mit einem Werkzeug, insbesondere mit einem Schraubendreher, betätigt zu werden.

5. Gehäuse nach einem der vorstehenden Ansprüche, **dadurch gekennzeichnet, dass** der Spreizstift (16) als zum Gehäuse (1) separates Element ausgebildet ist.

6. Gehause nach einem der vorstehenden Ansprüche, **dadurch gekennzeichnet**, das der Spreizstift (16) im Bereich einer Sollbruchstelle (17) lösbar mit dem Gehäuse (1) verbunden ist.

7. Gehäuse nach Anspruch 6, **dadurch gekennzeichnet, dass** die Sollbruchstelle (17) als Kragen oder als Abschnitt eines Kragens derart ausgelegt ist, dass sich der Spreizstift (16) durch axiales Niederdrücken vom Modulsockelgehäuse aus Isolierstoff lösen lässt.

8. Gehäuse nach einem der vorstehenden Ansprüche, **dadurch gekennzeichnet, dass** der Spreizstift (16) in dem Spalt drehbar gelagert ist und dass er in seinem in den Spalt eingreifenden Bereich derart geformt ist, dass durch Drehen des Spreizstiftes der Spalt aufspreizbar ist.

9. Gehäuse nach einem der vorstehenden Ansprüche, **dadurch gekennzeichnet, dass** der Spreizstift (16) im von der Tragschiene abgewandten äußeren Randbereich des Modulsockelgehäuses (1) angeordnet ist.

10. Gehäuse nach einem der vorstehenden Ansprüche, **dadurch gekennzeichnet, dass** der eine Verriegelungsschieber (9) zumindest abschnittsweise den anderen Verriegelungsschicher (10) übergreift.

11. Gehäuse nach einem der vorstchenden Ansprüche, **dadurch gekennzeichnet, dass** die beiden Verriegelungsschieber (9, 10) über eine U-förmige Feder (11) einstückig miteinander verbunden sind.

12. Gehäuse nach Anspruch 11, **dadurch gekennzeichnet, dass** sich die Feder (11) von einem mittigen Steg (19) des einen Verriegelungsschiebers (9) in mindestens einem oder mehreren Bögen zum anderen Verriegelungsschieber (10) erstreckt.

13. Gehäuse nach einem der vorstehenden Ansprüche, dadurch gekennzeichet, dass der eine Verriegelungsschieber einen rahmenartigen Rand (20) aufweist, in den der andere Verriegelungsschieber mit einem Steg (21) hineinragt, wobei zwischen dem inneren Randbereich des Randes (20) des einen Verriegelungsschiebers (9) und dem seitlichen Randbereich des anderen Verriegelungsschiebers (10) der Spalt (18) ausgebildet ist, in welchen der Spreizstift (16) eingreift.

14. Gehäuse nach einem der vorstchenden Ansprüche, **dadurch gekennzeichnet, dass** der Spreizstift (16) einen Kragen (22) aufweist, an dem er drehbar im Gehäuse (1) gelagert ist.

## Claims

1. A module housing, especially a module socket housing (1), for fixing to a support rail (4) with support rail edges (5, 6), wherein the housing (1) comprises:
a) a locking device (8) with two locking slides (9, 10) which are displaceable relative to each other and are connected to each other via a spring (11) and respectively comprise sections (12, 13) for engaging beneath the support rail edges (5, 6),
b) a spreader element (16) for spreading apart the locking slides (9, 10) against the force of the spring (11) for releasing the locking device from the support rail edges;
**characterized in that**
c) the spreader element is formed as a rotatable spreader pin (16) with a cross-section which is not circular over at least a part of its axial length.

2. A housing according to claim 1, **characterized in that** the spreader pin (16) has a flattened cross-section over a part of its axial length.

3. A housing according to claim 1 or 2, **characterized in that** the spreader pin (16) has an elliptical cross-section at least over a part of its axial length.

4. A housing according to one of the preceding claims, **characterized in that** the spreader pin (16) is formed to be actuated by a tool, especially a screwdriver.

5. A housing according to one of the preceding claims, **characterized in that** the spreader pin (16) is formed as an element that is separate from the housing (1).

6. A housing according to one of the preceding claims, **characterized in that** the spreader pin (16) is releasably connected to the housing (1) in the region of an intended breaking point (17).

7. A housing according to claim 6, **characterized in that** the intended breaking point (17) is formed as a collar or a section of a collar in such a way that the spreader pin (16) can be released by axially pressing down from the module socket housing made of an insulating material.

8. A housing according to one of the preceding claims, **characterized in that** the spreader pin (16) is rotatably mounted in the gap, and it is formed in its region engaging in the gap in such a way that the gap can be spread apart by twisting of the spreader pin.

9. A housing according to one of the preceding claims, **characterized in that** the spreader pin (16) is arranged in the exterior boundary region of the module socket housing (1) which faces away from the support rail.

10. A housing according to one of the preceding claims, **characterized in that** the one locking slide (9) engages at least in sections over the other locking slide (10).

11. A housing according to one of the preceding claims, **characterized in that** the two locking slides (9, 10) are integrally connected to each other via a U-shaped spring (11).

12. A housing according to claim 11, **characterized in that** the spring (11) extends from a central web (19) of the one locking slide (9) in at least one or several arcs to the other locking slide (10).

13. A housing according to one of the preceding claims, **characterized in that** the one locking slide comprises a frame-like edge (20) into which the other locking slide protrudes with a web (21), wherein the gap (18), into which the spreader pin (16) engages, is formed between the inner boundary region of the edge (20) of the one locking slide (9) and the lateral boundary region of the other locking slide (10).

14. A housing according to one of the preceding claims, **characterized in that** the spreader pin (16) comprises a collar (22) on which it is rotatably mounted in the housing (1).

## Revendications

1. Boîtier modulaire, en particulier boîtier d'embase modulaire (1), à poser sur un rail porteur (4) ayant des bords de rail porteur (5, 6), lequel boîtier (1) comporte :
a. un dispositif de verrouillage (8) avec deux coulisses de verrouillage (9, 10) pouvant coulisser l'une par rapport à l'autre, qui sont reliées entre elles par l'intermédiaire d'un ressort (11) et qui présentent chacune des sections (12, 13) destinées à passer sous les bords du rail porteur (5, 6),
b. un élément écarteur (16) pour écarter les coulisses de verrouillage (9, 10) contre la force du ressort (11) afin de libérer le dispositif de verrouillage des bords du rail porteur ;
**caractérisé en ce que**
c. l'élément écarteur est conformé comme une goupille d'écartement (16) ayant une section non circulaire sur au moins une partie de sa longueur axiale.

2. Boîtier selon la revendication 1, **caractérisé en ce que** la goupille d'écartement (16) présente une section aplatie sur au moins une partie de sa longueur axiale.

3. Boîtier selon la revendication 1 ou 2, **caractérisé en ce que** la goupille d'écartement (16) présente une section elliptique sur au moins une partie de sa longueur axiale.

4. Boîtier selon l'une des revendications précédentes, **caractérisé en ce que** la goupille d'écartement (16) est conçue pour être actionnée avec un outil, en particulier avec un tournevis.

5. Boîtier selon l'une des revendications précédentes, **caractérisé en ce que** la goupille d'écartement (16) est conformée comme un élément séparé du boîtier (1).

6. Boîtier selon l'une des revendications précédentes, **caractérisé en ce que** la goupille d'écartement (16) est reliée au boîtier (1) de façon à pouvoir en être détachée au niveau d'un point de rupture (17).

7. Boîtier selon la revendication 6, **caractérisé en ce que** le point de rupture (17) est conformé comme un collet ou une section d'un collet, de telle manière que la goupille d'écartement (16) puisse être libérée par la compression axiale du boîtier d'embase modulaire en matériau isolant.

8. Boîtier selon l'une des revendications précédentes, **caractérisé en ce que** la goupille d'écartement (16) est supportée avec possibilité de rotation dans l'interstice et **en ce qu'**elle a, dans la zone pénétrant dans l'interstice, une forme telle que la rotation de la goupille d'écartement puisse élargir l'interstice.

9. Boîtier selon l'une des revendications précédentes, **caractérisé en ce que** la goupille d'écartement (16) est disposée dans la zone de bord extérieure du boîtier d'embase modulaire (1) tournée à l'opposé du rail porteur.

10. Boîtier selon l'une des revendications précédentes, **caractérisé en ce que** l'une des coulisses de verrouillage (9) saisit au moins par endroits l'autre coulisse de verrouillage (10).

11. Boîtier selon l'une des revendications précédentes, **caractérisé en ce que** les deux coulisses de verrouillage (9, 10) sont reliées d'un seul tenant entre elles par l'intermédiaire d'un ressort (11) en forme de U.

12. Boîtier selon la revendication 11, **caractérisé en ce que** le ressort (11) s'étend d'une barrette centrale (19) de l'une des coulisses de verrouillage (9) jusqu'à l'autre coulisse de verrouillage (10) en formant au moins un ou plusieurs arcs.

13. Boîtier selon l'une des revendications précédentes, **caractérisé en ce que** l'une des coulisses de verrouillage présente un bord en forme de cadre (20) dans lequel l'autre coulisse de verrouillage dépasse avec une barrette (21), l'interstice (18) dans lequel la goupille d'écartement (16) se met en prise étant formé entre la zone de bord intérieure du bord (20) d'une coulisse de verrouillage (9) et la zone de bord latérale de l'autre coulisse de verrouillage (10).

14. Boîtier selon l'une des revendications précédentes, **caractérisé en ce que** la goupille d'écartement (16) présente un collet (22) sur lequel elle est supportée avec possibilité de rotation dans le boîtier (1).
